## Europäisches Patentamt

## European Patent Office

## Office européen des brevets

(19)

(11) Numéro de publication: **0 244 330**
**B1**

(12) **FASCICULE DE BREVET EUROPEEN**

(45) Date de publication du fascicule du brevet:
**22.11.90**

(21) Numéro de dépôt: **87420114.8**

(22) Date de dépôt: **28.04.87**

(51) Int. Cl.⁵: **A01J 25/13**

(54) **Moules à fromage empilables et retournables.**

(30) Priorité: **28.04.86 FR 8606359**

(43) Date de publication de la demande:
**04.11.87 Bulletin 87/45**

(45) Mention de la délivrance du brevet:
**22.11.90 Bulletin 90/47**

(84) Etats contractants désignés:
**AT BE CH DE ES FR GB GR IT LI LU NL SE**

(56) Documents cités:
**DE-A- 2 449 916**
**FR-A- 2 036 711**
**FR-A- 2 429 555**
**FR-A- 2 491 291**

(73) Titulaire: **A. MINO-GAILLARD S.A., 11, rue Pasteur,**
**F-01101 Oyonnax Cedex(FR)**

(72) Inventeur: **Goillon, Jean-Pierre, Sur la Roche Rue R.**
**Wagner Veyziat, F-01100 Oyonnax(FR)**

(74) Mandataire: **Karmin, Roger et al, Cabinet**
**MONNIER 150, Cours Lafayette, F-69003 Lyon(FR)**

## Description

La présente invention est relative à des perfectionnements apportés aux moules utilisés dans les laiteries pour la production en série de fromages.

Les moules en question, qui se présentent sous forme de blocs comportant des séries de moules identiques placés côte à côte, comportent un fond dont les deux faces sont pourvues de rainures de manière à permettre l'écoulement du petit lait en direction de l'extérieur, des ouvertures étant à cet effet ménagées dans leur cloison latérale. Chaque moule comporte un épaulement entourant son ouverture, tandis que sa cloison périphérique se prolonge au-delà du fond pour former une espèce de pied tubulaire qui vient reposer contre l'épaulement du moule inférieur lorsque l'on gerbe lesdits articles. De tels moules sont décrits dans le document DE-A 2 449 916.

L'inconvénient principal de tels moules réside dans le fait qu'aucun organe n'est prévu pour assurer de manière certaine que le petit lait, qui s'écoule en direction de l'extérieur, ne retombe pas dans le moule inférieur, dans quelque position que se trouvent les moules. Etant donné que l'étanchéité entre l'extrémité du pied et l'épaulement du moule inférieur n'est pas assurée, le petit lait tombant entre ce pied et l'épaulement peut très facilement pénétrer dans le moule inférieur et remouiller la pâte qu'il contient.

Les perfectionnements qui font l'objet de la présente invention visent à remédier à ces inconvénients et à permettre la réalisation d'un moule du genre en question qui évite absolument toute retombée du petit lait dans le moule inférieur.

A cet effet, le moule à fromage suivant l'invention comporte au niveau de son fond une collerette se dressant à partir de la cloison périphérique de ce moule en direction de l'extérieur, les ouvertures d'écoulement précitées sont arrangées en deux rangées se trouvant de part et d'autre de cette collerette.

Dans un mode d'exécution preféré de la disposition qui précède, les deux faces horizontales de la collerette comportent des creusures déterminant ce qu'on appelle dans le bâtiment une «goutte d'eau», de telle sorte qu'on soit assuré que la chute verticale du liquide reçu par la collerette s'effectue le long d'une ligne de formation de gouttes prédéterminée située à l'extérieur de toute saillie périphérique du moule.

Le dessin annexé, donné à titre d'exemple, permettra de mieux comprendre l'invention, les caractéristiques qu'elle présente et les avantages qu'elle est susceptible de procurer :

Fig. 1 est une vue en perspective d'un moule unitaire établi conformément à l'invention.

Fig. 2 et 3 illuestrent en coupes verticales partielles l'utilisation de moules empilés, respectivement avec leurs ouvertutures tournées vers le haut et vers le bas.

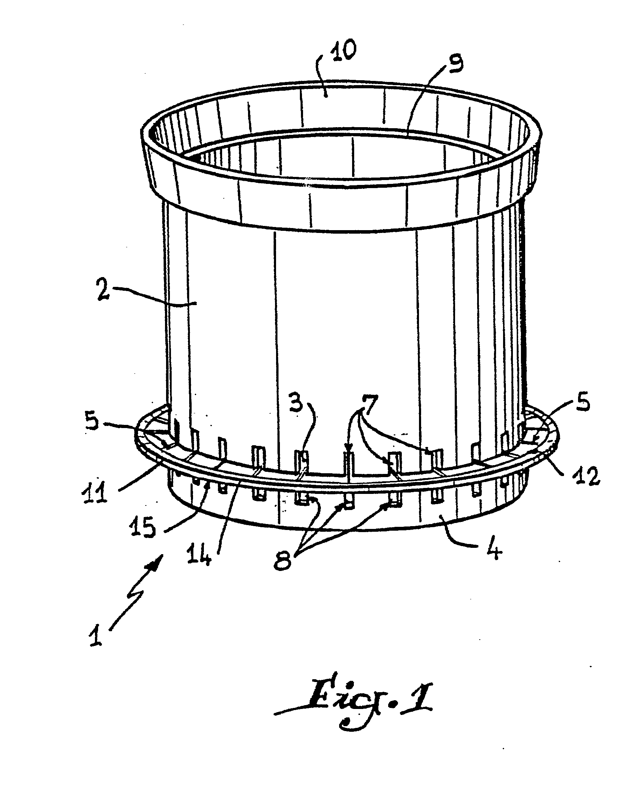

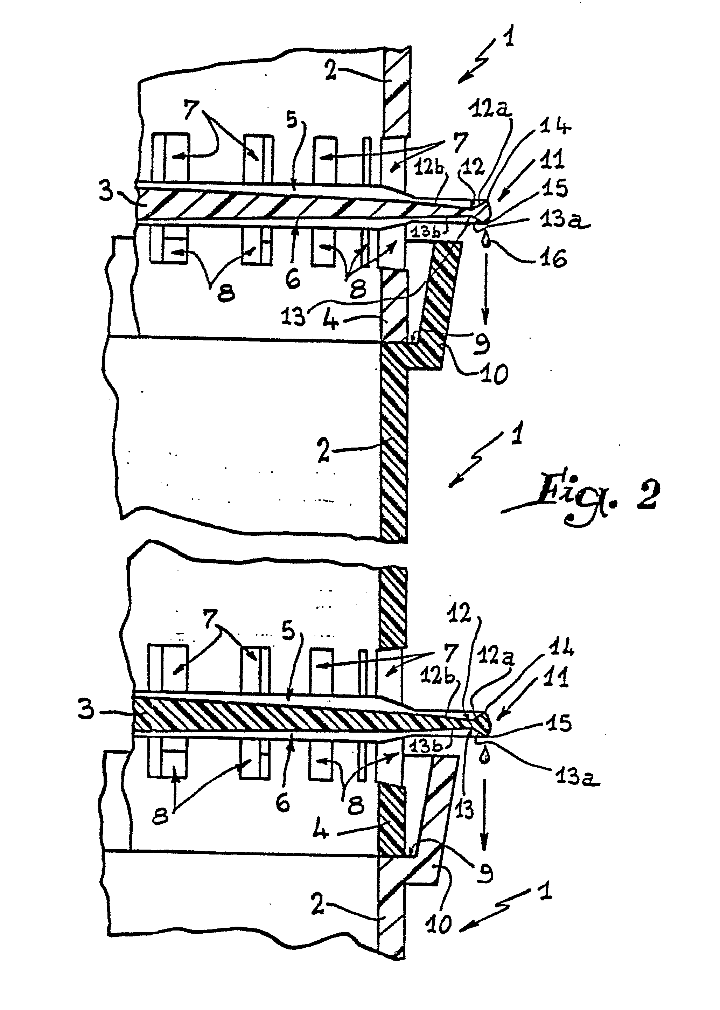

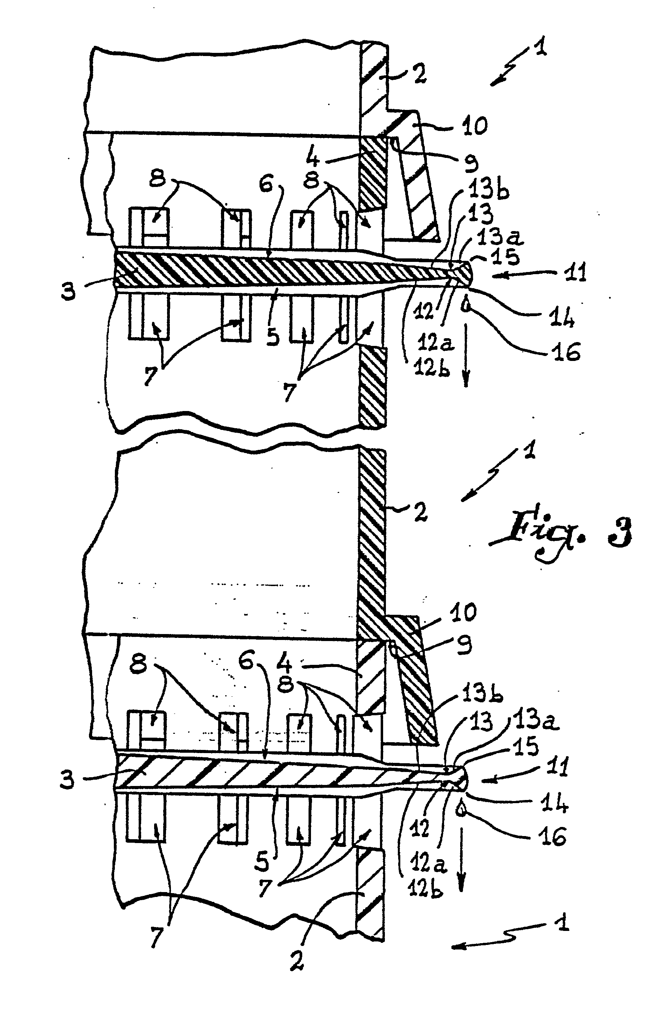

Le moule à fromage illustré en fig. 1 et affecté de la référence générale 1, comprend essentiellement une paroi tubulaire cylindrique 2 fermée par un fond 3 (fig. 2 et 3). La cloison tubulaire 1 se prolonge en dessous du fond par un manchon 4 qui constitue un pied tubulaire pour le moule 1, comme on l'expliquera mieux plus loin. Les faces respectivement intérieure et extérieure du fond 3 sont pourvues à la manière connue de rainures radiales 5, 6 aboutissant à des ouvertures 7, 8 ménagées d'une part dans le bas de la cloison 1 et d'autre part dans le haut du pied 4.

La partie supérieure de la cloison 2 comprend un épaulement 9 orienté perpendiculairement à l'axe géométrique de la cloison 2 et auquel fait suite un bord évasé 10 dont la hauteur est infériere à celle du pied 4.

Dans ces conditions, on peut empiler des moules 1 les uns sur les autres comme illustré en fig. 2, l'arête libre du pied 4 reposant contre l'épaulement 9 du moule inférieur.

Conformément à l'invention, une collerette 11 est ménagée sur la périphérie de la cloison 2 entre les séries d'ouvertures 7 et 8. Cette collerette se dresse vers l'extérieur préférablement perpendiculairement à la cloison 2. Elle constitue en somme un prolongement vers l'extérieur du fond 3 sur le pourtour du moule.

Les deux faces horizontales de la collerette 11 peuvent comporter des creusures 12, 13. Dans un mode d'exécution préféré, les creusures en question déterminent sur chaque face une gorge concentrique à la cloison 2, laquelle gorge comporte deux faces 12a, 12b respectivement 13a, 13b. Les faces 12a, 13a réunissent le pourtour de la collerette 11 et le fond des gorges 12 et 13. Ainsi elles déterminent deux arêtes 14, respectivement 15 qui constituent chacune une ligne de formation de gouttes d'écoulement du liquide, comme on l'expliquera mieux plus loin.

Comme illustré en fig. 2, on peut empiler une série de moules 1 de manière que le pied 4 de chacun d'eux prend appui contre l'épaulement 9 de celui situé en dessous de lui. La pâle à fromage repose alors contre la face intérieure du fond 3 et le petit lait s'écoule par les rainures 5 en direction de la colerette 11 après avoir traversé les ouvertures 7. Le petit lait s'accumule dans la gorge 12 de la face supérieure de la collerette 11 à partir de la quelle gorge il déborde en direction de l'extérieur en franchissant l'arête 14. Ce petit lait ruisselle ensuite sur la face extérieure périphérique de la collerette 11 pour s'écouler vers le bas. On comprend aisément que l'arête 15 située en dessous de celle 14 constitue une ligne de formation de gouttes 16, tout ruissellement sur la face inférieure de la collerette 11 étant impossible du fait de la présence de la face oblique 13a orientée vers le haut. Bien entendu, les arêtes 14 et 15 se trouvent sur un diamètre largement supérieur à celui maximal du bord évasé 10, de telle sorte qu'on est assuré que les gouttes 16 tombent à l'extérieur du moule inférieur et ne peuvent en aucun cas remouiller la pâte qu'il renferme.

Si l'empilage illustré en fig. 2 est retourné comme on l'a montré en fig. 3, la pâte contenue dans le moule supérieur repose contre la face extérieure du moule situé en dessous de lui, si bien que le petit lait s'écoule vers l'extérieur par l'intermédiaire des rainures 6 pour traverser les ouvertures 8 et parvenir dans la gorge 13 de la même manière que celle décrite ci-dessus en référence à fig. 2. Le petit lait s'écoule à partir de ladite gorge 13 sur la face périphérique de la collerette 11 puis tombe le long de l'arête 14 en direction du bas. Là encore, il est impossible que les gouttes en question pénètrent dans le moule inférieur par suite de la forme de la gorge 12 et en particulier de la présence de la face oblique remontante 12a.

On a ainsi réalisé des moules à fromage empilables et retournables qui assurent l'évacuation du petit lait vers l'extérieur sans qu'il ne puisse pénétrer dans les moules inférieurs pour remouiller la pâte qu'ils contiennent.

Il va de soi que l'on n'a représenté qu'un moule unitaire, mais qu'on peut fabriquer des blocs de moules en accolant des rangées de moules unitaires 1, les collerettes 11 jouant alors strictement le même rôle que celui décrit ci-dessus.

En particulier, l'invention s'applique à des moules de toute section droite et dont le fond affecte une forme quelconque c'est-à-dire plate ou arrondie.

## Revendications

1. Moules à fromage empilables et retournables, du genre dont le fond (3) comporte sur ses deux faces des rainures d'écoulement (5, 6) du petit lait en direction de l'extérieur et aboutissant à des ouvertures (7, 8) ménagées dans sa cloison périphérique tandis qu'une collerette entoure l'ouverture du moule, caractérisés en ce qu'au niveau dudit fond (3), chaque moule comporte une collerette (11) se dressant à partir de ladite cloison en direction de l'extérieur, les ouvertures d'écoulement précitées (7, 8) sont arrangées en deux rangées se trouvant de part et d'autre de cette collerette (11).

2. Moule suivant la revendication 1, caractérisé en ce que les faces horizontales de la collerette (11) comportent chacune des creusures (12, 13) determinant une ligne de formation des gouttes (14, 15).

3. Moule suivant la revendication 2, caracterisé en ce que la ligne de formation des gouttes (14, 15) se trouve placée à l'extérieur de toute saillie périphérique (10) dudit moule (1).

## Patentansprüche

1. Stapelbare und wendbare Käseform, bei der der Boden (3) auf seinen beiden Seiten Ablaufrinnen (5, 6) für die Molke in Richtung nach außen und angrenzend Öffnungen (7, 8) aufweist, die in der peripheralen Begrenzungswand ausgespart sind, wobei ein Kragen die Öffnung der Form umgibt, dadurch gekennzeichnet, daß in Höhe des Bodens (3) jeder Form ein Kragen (11) angeordnet ist, der sich in Richtung der Wand nach außen hin erhebt, wobei die Auslauföffnungen (7, 8) in zwei Reihen, die sich im einen und anderen Teil des Kragens (11) befinden, angeordnet sind.

2. Käseform nach Anspruch 1, dadurch gekennzeichnet, daß die horizontalen Seiten des Kragens (11) Auskehlungen (12, 13) aufweisen, die bestimmt sind, eine Leitung zur Bildung von Tropfen zu ergeben.

3. Käseform nach Anspruch 2, dadurch gekennzeichnet, daß die Leitung zur Bildung der Tropfen am Ende der ganzen überkragten Peripherie (10) der Form angeordnet ist.

## Claims

1. Cheese moulds which are stackable and reversible, of the kind in which the base (3) comprises on its two faces channels (5, 6) which allow the outflow of whey and are adjacent openings (7, 8) provided in the peripheral wall, whereas a flange surrounds the mouth of the mould, characterised in that at the level of the said base (3) each mould comprises a flange (11) extending outwardly beyond the said wall, and the aforementioned openings (7, 8) are arranged in two rows one on each side of the flange.

2. Mould according to claim 1, characterised in that the horizontal faces of the flange (11) each comprise grooves (12, 13) determining a line of formation of drops.

3. Mould according to claim 2, characterised in that the line of formation of drops (14, 15) is disposed outside the peripheral extension (10) of the said mould (1).

EP 0 244 330 B1

*Fig. 1*

*Fig. 2*

*Fig. 3*